# EUROPEAN PATENT APPLICATION

(11) **EP 0 718 508 A2**
(43) Date of publication of application: **26.06.1996**
(21) Application number: 95308636.0
(22) Date of filing: 30.11.1995
(51) Int. Cl.: F16B 19/10

(54) **Improved blind rivet**

(30) Priority: 16.12.1994 GB 9425446
(71) Applicant: EMHART INC., Newark, Delaware 19711 (US)
(72) Inventor: Smith, Daniel Robin Mr., Castle Bromwich, Birmingham B36 9BG (GB); Armstrong, Donald, William Mr., Walmley, Sutton Coldfield B76 8NU (GB)
(74) Representative: Moffat, John Andrew

(57) **Abstract**

A space is provided in a mandrel into which rivet sleeve material can be moved to provide after setting a locking of the rivet sleeve to the remaining part of the mandrel. This locks the remaining portion of the mandrel head forming resistance to push out, preventing anti-rattle and leads to the elimination of debris prolonging the use of the setting tool.

## Description

The present invention relates to an improved blind rivet assembly, comprising a tubular sleeve and a pulling mandrel.

In known blind rivet assemblies, the tubular sleeve is provided with a flange at one end, the flange in use to be seated against the top side of the workpieces to be rivetted together, that is against the side of the workpieces to which the rivet is to be applied. The pulling mandrel is formed with an enlarged head at one end and a pulling tail at the other. Between the two end regions is an area of weakness known as a breakneck. The head has a diameter larger than the internal diameter of the sleeve. Prior to use the sleeve and mandrel are assembled such that the pulling tail of the mandrel projects from the flanged end of the sleeve.

In use, the rivet assembly is located in a hole extending through the workpieces, with the flange on the sleeve seated against the upper workpiece. The mandrel is pulled through the workpiece, deforming the sleeve radially on the blind side of the workpieces to hold the workpieces together. Subsequent pulling on the mandrel causes the mandrel to deform and break in the breakneck region of the mandrel. This is the process of setting the rivet.

While blind riveting is most frequently used to secure two or more workpieces together, as described above, it may also be used in cases where the rivet does not serve this function, but serves some other function, for example to provide ornamentation or to serve as an anchorage for attachment of another workpiece. However, the process of setting such rivets remains that used for setting the above blind rivet assemblies.

Blind rivet assemblies, particularly those of the break stem variety where the mandrel stem is designed to break close to the head of the mandrel, when set, are characterised by the mandrel head being relatively free to move within the set rivet sleeve at the blind side of the workpiece thus giving rise to a "rattling noise" when the workpiece assembly is subjected to an external source of vibration. Customers, more particularly automotive customers, in the pursuance of quieter road vehicles are seeking to eliminate this type of rattle.

Blind rivet designs have improved by moving the breakneck or crimp break away from the mandrel head so that the shaft of the mandrel between the mandrel head and the break point is jammed in the bore of the rivet sleeve on setting, for example as shown in GB 2 269 837 A (Avdel Systems) or US 5 102 274 (Textron). This design of rivet is very dependent upon the hole size and thickness of the workpiece and the frictional characteristics between the mandrel and the bore of the rivet sleeve, thus giving a variable retention load. This retention load can be measured by pushing on the broken portion of the mandrel stem in a tensile testing machine.

A further problem of known blind rivet assemblies is the generation of a circular shaped portion of material which is trapped beneath the mandrel head upon setting. This portion of material is formed from the inner part of the rivet sleeve and also reduces the ability of the mandrel to be locked into the rivet sleeve and can cause debris to accumulate in the setting tool with subsequent jaw clogging if dislodged from beneath the head.

According to the present invention a blind rivet assembly comprising a sleeve with a flange at one end and a pulling mandrel is characterised in that an end of the sleeve remote from the flange is provided with a taper on its inner surface and the mandrel is provided with a head portion and a breakneck with a portion of reduced diameter at or adjacent to the head portion.

In a preferred embodiment, the portion of reduced diameter is in the form of a taper directed towards the head portion. Preferably the taper extends between the breakneck and the head portion.

The advantages accruing from both parts is an enhanced mandrel locking feature giving rise to positive anti-rattle and the elimination of debris which prolongs the use of the setting tool without the need to clean the jaws or the front end of the setting tool.

The provision of a space in the mandrel into which rivet sleeve material can be moved means locking of the sleeve to the remaining part of the mandrel after setting is provided.

Removing the inner portion of the sleeve by a taper enables the mandrel head to pass into the rivet sleeve, displacing it outwardly as in known setting without removing material from the inner edge of the rivet sleeve and thereby allowing space for the rivet sleeve material to move as setting is nearing completion.

As setting progresses the mandrel head continues to pass through the rivet sleeve until the workpiece parts are collected together and as the setting load increases the rivet sleeve material beneath the head of the mandrel being unable to move outwardly is forced to move inwardly to fill the gap beneath the mandrel head.

Since this portion of the mandrel head is tapered away from the mandrel head this effectively locks the remaining portion of the mandrel head and forms resistance to push out.

The prior art and the invention will now be described by way of example only with reference to the accompanying drawings in which:
Figure 1 shows one end of a known rivet sleeve and mandrel;
Figure 2 shows a section through the rivet sleeve and mandrel of Figure 1 when set; and
Figure 3 shows a view similar to Figure 1 but of the rivet sleeve and mandrel of the present invention.

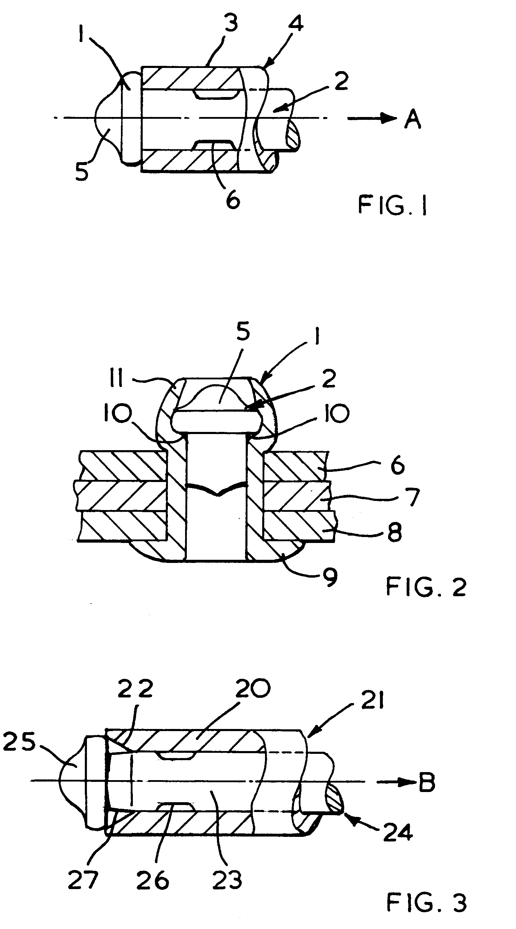

Referring to Figure 1, an end 1 of a pulling mandrel 2 is shown, together with the associated end 3 of a rivet sleeve 4. The end 1 of the mandrel 2 terminates in an enlarged head 5. A breakneck portion 6 of the pulling mandrel is also shown. In setting the rivet assembly the mandrel 2 moves relative to the sleeve 4 in the direction of arrow A.

An example of such a rivet, once set, is shown in Figure 2. The enlarged head 5 has radially expanded the end 1 of the sleeve, such that the workpieces 6, 7 and 8 are held between a flange 9 of the sleeve and the deformed portion 11 of the sleeve. Small portions 10 can be seen trapped between the enlarged head 5 and the deformed portion 11 of the sleeve. It can also be seen that the deformed portion 11 of the sleeve is not adapted to retain the remains of the mandrel against any subsequent significant pushing force.

In Figure 3, one end of a rivet assembly according to the present invention is shown.

One end 20 of a sleeve 21 is shown having an internal taper 22. One end 23 of a mandrel 24 is provided with an enlarged head 25 and a breakneck portion 26. A taper 27 is provided between the breakneck portion 26 and the enlarged head, such that the diameter of the mandrel decreases towards the enlarged head 25.

On setting the rivet assembly, by the relative movement of the mandrel, in the direction of arrow B, with respect to the sleeve, the enlarged head 25 passes into the rivet sleeve 21, displacing it outwardly as in a known setting operation but without removing material from the inner edge of the rivet sleeve and thereby allowing space for the rivet sleeve material to move as setting is nearing completion.

As setting progresses the enlarged head 25 continues to pass through the rivet sleeve until the workpieces are collected together and then as the setting load increases the rivet sleeve material beneath the head of the mandrel being unable to move outwardly is forced to move inwardly to fill the gap beneath the mandrel head.

Since this portion of the mandrel is tapered away from the mandrel head this effectively locks the remaining portion of the mandrel head and forms resistance to push out.

## Claims

1. A blind rivet assembly comprising a sleeve with a flange at one end and a pulling mandrel is characterised in that an end of the sleeve remote from the flange is provided with a taper on its inner surface and the mandrel is provided with a head portion and a breakneck with a portion of reduced diameter at or adjacent to the head portion.

2. A blind rivet assembly according to Claim 1, characterised in that the portion of reduced diameter is in the form of a taper directed towards the head portion.

3. A blind rivet assembly according to Claim 2, characterised in that the taper extends between the breakneck and the head portion.

4. A blind rivet assembly substantially as described herein with reference to, and as illustrated in the accompanying figures.
